(19) Europäisches Patentamt
European Patent Office
Office européen des brevets

(11) Veröffentlichungsnummer: **0 096 806**
**B1**

(12) **EUROPÄISCHE PATENTSCHRIFT**

(45) Veröffentlichungstag der Patentschrift: **03.09.86**

(21) Anmeldenummer: **83105452.3**

(22) Anmeldetag: **01.06.83**

(51) Int. Cl.⁴: **B 41 M 5/035**, D 06 P 5/00, C 09 D 11/10

(54) **Wässrige Drucktinten für den Transferdruck.**

(30) Priorität: **04.06.82 CH 3471/82**

(43) Veröffentlichungstag der Anmeldung: **28.12.83 Patentblatt 83/52**

(45) Bekanntmachung des Hinweises auf die Patenterteilung: **03.09.86 Patentblatt 86/36**

(84) Benannte Vertragsstaaten: **AT BE CH DE FR GB IT LI NL**

(56) Entgegenhaltungen:
**DE-A-2 738 084**
**FR-A-2 023 496**
**FR-A-2 289 585**

(73) Patentinhaber: **CIBA- GEIGY AG, Klybeckstrasse 141, CH- 4002 Basel (CH)**

(72) Erfinder: **Défago, Raymond, Bäumlihofstrasse 421, CH- 4125 Riehen (CH)**
Erfinder: **Bäuerle, Rolf, Im Hirshalm 9, CH- 4125 Riehen (CH)**

(74) Vertreter: **Zumstein, Fritz, Dr., Bräuhausstrasse 4, D-8000 München 2 (DE)**

**EP 0 096 806 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft neue wässrige Drucktinten für den Transferdruck und deren Verwendung zur Herstellung von Transferdruckträgern auf Tiefdruckmaschinen.

Bislang werden zur Herstellung von Transferdruckträgern auf Tiefdruckmaschinen vor allem Drucktinten auf organischer Basis, wie Aethanol, Aethylacetat oder Methyläthylketon verwendet. Nachteile dieser organischen Drucktinten sind deren Feuergefährlichkeit und die Belastung der Umwelt.

Die bekannten wässrigen Drucktinten enthaltend z.B. als Binde- und Verdickungsmittel alleinig ein Polyacrylharz erwiesen sich jedoch in der Praxis auf Tiefdruckmaschinen als nicht geeignet, da der Trocknungsprozess zu langsam ist, die Egalität des Warenbildes nicht zufriedenstellend ausfällt und die Gravuren meist verstopft werden.

Aufgabe der Erfindung war es daher, wässrige Drucktinten zu entwikkeln, welche die genannten Nachteile nicht aufweisen und somit zur Herstellung von Transferdruckträgern auf Tiefdruckmaschinen verwendet werden können.

Die Lösung dieser Aufgabe bot sich mit einer wässrigen Tinte an, die eine Mischung aus mindestens einem Polyvinylalkohol und einem Polyacrylat und/oder einem Acrylsäuremethyl/äthylester-Styrol Copolymer enthält. Derartige Tinten sind wegen ihrer wässrigen Basis nicht feuergefährlich und belasten nicht die Umwelt; sie haben weiterhin den Vorteil, dass sie relativ schnell trocknen, eine sehr gute Bildqualität ergeben und zudem die Gravuren nicht verstopfen.

Gegenstand der vorliegenden Erfindung sind somit neue wässrige Drucktinten, welche mindestens einen für den Transferdruck geeigneten sublimierbaren Farbstoff, gegebenenfalls weitere Zusätze, mindestens einen Polyvinylalkohol und ein Polyacrylat und/oder ein Acrylsäuremethyl/äthylester-Styrol Copolymer enthalten.

Die für den Transferdruck geeigneten Farbstoffe sind bekannt. Es handelt sich hierbei vorzugsweise um in Wasser unlösliche bis schwerlösliche Farbstoffe, insbesondere Dispersionsfarbstoffe, welche bei atmosphärischem Druck zwischen 150 und 220°C zu mindestens 60 % in weniger als 60 Sekunden in den Dampfzustand übergehen, hitzestabil und unzersetzt transferierbar sind. Es können aber auch Farbstoffpräparationen eingesetzt werden, die derartige Farbstoffe enthalten, z.B. solche gemäss der DE-OS 2 850 482 oder DE-OS 2 520 527.

Als weitere Zusätze können die Tinten beispielsweise noch Antischaummittel z.B. auf Basis von 2-Aethyl-n-Hexanol und gegebenenfalls pH-Wert regulierende Komponenten, wie z.B. Ammoniak, Alkanolamine, etwa Triäthanolamin oder auch Natron- bzw. Kalilauge enthalten. Der pH-Wert der Tinten liegt zweckmässiger Weise im Bereich von 6 bis 9, insbesondere zwischen 7 und 8,5.

Der Ausdruck "Tinten auf wässriger Basis" soll hier und im folgenden so verstanden sein, dass es sich sowohl um eine rein wässrige Tinte handelt als auch um eine wässrige Tinte, die noch bis ca. 8 Gewichtsprozent eines mit Wasser mischbaren organischen Lösungsmittels, z.B. einen Alkohol, vor allem Isopropanol enthält.

Erfindungswesentlich ist der Zusatz einer Mischung aus mindestens einem Polyvinylalkohol und einem Polyacrylat und/oder einem Acrylsäuremethyl/äthylester-Styrol Copolymer. Insgesamt betrachtet werden diese Komponenten vorteilhaft in einer Konzentration von 5 bis 20 Gew.-%, bezogen auf die fertige Formulierung, in die Tinte eingearbeitet.

Als Polyvinylalkohole gelangen vor allem solche zur Anwendung, deren Molgewicht über 10000 liegt. Bevorzugt verwendet man Polyvinylalkohole mit einem Polymerisationsgrad von etwa 300 bis 5000 und einem Molgewicht von ca. 13'000 bis 125'000; diese können teilweise vorteilhaft zu 10 bis 20 % - verestert sein.

Bei dem als weitere Komponente verwendeten Polyacrylat bzw. Acrylsäuremethyl/äthylester-Styrol Copolymerisat handelt es sich in erster Linie um solche Verbindungen, deren Molgewicht ebenfalls über 10'000 und zwar im Bereich von 10'000 bis ca. 1'000'000 liegt. Neben hochmolekularen Polyacrylaten werden jedoch insbesondere auch solche Typen verwendet, die ein Molgewicht von 10'000 bis 25'000 aufweisen.

Unter dem Begriff Polyacrylat wird eine polymere Acrylsäure verstanden, deren Carboxylgruppen gegebenenfalls teilweise oder vollständig mit einem niederaliphatischen, gesättigten Alkohol, insbesondere Methanol oder Aethanol verestert sind. Bei den veresterten Typen kann es sich z.B. um ein Polymer aus Acrylsäuremethyl- oder Acrylsäureäthylester oder auch um ein Copolymerisat aus den genannten Monomeren handeln. Bevorzugt wird als Polyacrylat ein Copolymerisat aus Acrylsäuremethyl- und Acrylsäureäthylester verwendet, das die Monomeren etwa im Verhältnis 1:1 enthält.

Der Ausdruck Acrylsäuremethyl/äthylester-Styrol Copolymer bezeichnet im vorliegenden Fall ein Copolymerisat aus dem Methyl- und Aethylester der Acrylsäure und Styrol. Bevorzugt zur Anwendung gelangen solche Copolymerisate, die ca. 20% Acrylsäuremethyl- und Acrylsäureäthylester und ca. 80% Styrol enthalten.

Das Mischungsverhältnis von Polyvinylalkohol zu Polyacrylat und/oder Acrylsäuremethyl/äthylester-Styrol Copolymer beträgt vorteilhaft 1:1 bis 1:10. Polyvinylalkohol und Polyacrylat werden zweckmässiger Weise als wässrige oder wässrig/alkoholische Lösung eingesetzt; das Acrylsäuremethyl/äthylester-Styrol Copolymer gelangt vorteilhaft als wässrige Emulsion zur Anwendung.

Die erfindungsgemässen Drucktinten sind niederviskos und zeichnen sich durch stabile Viskositätswerte aus. Diese liegen vorteilhaft im Bereich von etwa 10 bis 300 mPas. Tinten, welche noch zusätzlich ein organisches Lösungsmittel enthalten, sollen einen Flammpunkt über 50°C aufweisen. Bei Verwendung der mit diesen neuen Tinten bedruckten Transferdruckträgern im Transferdruck werden konturenscharfe und egale Drucke erhalten.

Das Transferdruckverfahren ist allgemein bekannt und beispielsweise detailliert in den französischen Patentschriften 1 223 330, 1 334 829 und 1 585 119 beschrieben. Dabei werden Transferdruckträger die mit geeigneten Tinten bedruckt sind, in einen engen Kontakt mit dem zu bedruckenden Substrat gebracht, worauf unter Wärme- und gegebenenfalls Druckeinwirkung der Farbstoff von dem Träger auf das Substrat transferiert wird.

Als Transferdruckträger kommen hitzestabile und räumlich stabile flächenförmige Gebilde, mit vorteilhaft glatter Oberfläche z.B. aus Papier, Cellophan und Metallfolien in Betracht (vgl. britische Patentschrift 1 190 889); bevorzugt ist Papier.

Der Transfer wird in üblicher Weise durch Wärmeeinwirkung ausgeführt. Hierzu werden die behandelten Trägermaterialien mit den zu bedrukkenden Textilmaterialien in Kontakt gebracht und so lange auf etwa 150 bis 220° C gehalten, bis die auf dem Trägermaterial aufgebrachten definitionsgemässen Farbstoffe auf das Textilmaterial übertragen sind. Dazu genügen in der Regel 5 bis 60 Sekunden.

Nach beendeter Wärmebehandlung wird das bedruckte Material vom Träger getrennt. Dieses bedarf keiner Nachbehandlung, weder einer Dampfbehandlung, um den Farbstoff zu fixieren, noch eines Waschens, um die Echtheiten zu verbessern.

Geeignete Transferdrucksubstrate sind vor allem textile Materialien, insbesondere flächenförmige Gebilde wie Vliese, Filze, Teppiche und insbesondere Gewebe und Gewirke aus synthetischen Fasern, vor allem Polyestermaterialien.

Die folgenden Beispiele erläutern die Erfindung ohne sie darauf zu beschränken. Teile bedeuten Gewichtsteile und Prozente Gewichtsprozente. Viskositäten werden mit dem Brookfield-Viskosimeter RVT bestimmt (Spindel 1, 20 U/min. 20° C).

**Beispiel 1:**

Zu 800 g eines Verdünners der Zusammensetzung:
635 g Wasser
5 g Triäthanolamin
10 g einer Mischung von Antischaummittel auf Basis von 2-Aethyl-n-Hexanol
200 g Polyvinylalkohol (Polymerisationsgrad ca. 530; Mol.Gew. ca. 20'000) in Wasser (Feststoffgehalt 20 %)
150 g Acrylsäuremethyl/äthylester-Styrol Copolymer (20% Acrylsäureester, 80% Styrol als wässrige Emulsion; Feststoffgehalt: 48%).
gibt man 200 g einer wässrigen Präparation. enthaltend 90 g des Farbstoffes der Formel

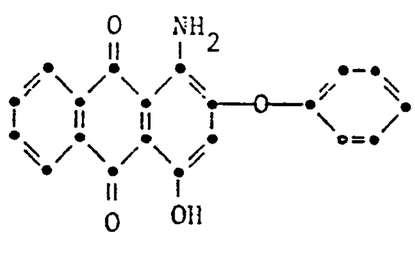

(Rest Wasser und die in Flüssigformulierungen üblichen Dispergiermittel) wobei man 1000 g einer Drucktinte erhält, mit welcher man Papier im Tiefdruckverfahren bedruckt. Die Tinte hat eine Viskosität von 180 mPas.

Der Auftrag auf das Papier erfolgt stellenweise oder ganzflächig. Das bedruckte Papier wird bei 100° C während einigen Sekunden getrocknet. Es ist reibecht und jederzeit zum Bedrucken von synthetischen Fasermaterialien nach dem thermischen, trockenen Transferdruckverfahren einsetzbar. Zum Bedrucken des Fasermaterials wird das Papier und ein Polyester-Gewebe während 30 Sekunden bei 210°C in einer Transferpresse zusammengepresst. Nach dem Transferieren des Farbstoffes vom Papier auf das Polyestergewebe erhält man auf dem Gewebe rote, intensive Musterungen mit scharfen Konturen.

**Beispiel 2:**

Man verfährt wie im Beispiel 1 angegeben, verwendet jedoch 800 g des Verdünners folgender zusammensetzung:
630 g Wasser
10 g einer Mischung von Antischaummittel auf Basis von 2-Aethyl-n-Hexanol

10 g eines Verdickers auf Basis von Polyacrylsäure (MG ca. $1x10^6$)
200 g Polyvinylalkohol (Polymerisationsgrad ca. 530; Mol. Gew. ca. 20'000) in Wasser (Feststoffgehalt 20 %)
150 g Acrylsäuremethyl/äthylester-Styrol Copolymer (20% Acrylsäureester, 80% Styrol als wässrige Emulsion; Feststoffgehalt: 48 %).

Mit der so erhaltenen Drucktinte (Viskosität 195 mPas) wird Papier im Tiefdruckverfahren bedruckt. Nach dem Transferieren des Farbstoffes vom Papier auf das Polyestergewebe mittels Transferdruckverfahren erhält man rote intensive Musterungen mit scharfen Konturen.

**Beispiel 3:**

Papier wird im Tiefdruckverfahren mit einer Drucktinte der folgenden Zusammensetzung bedruckt:
40 g einer wässrigen Präparation enthaltend 18 g des Farbstoffes der Formel

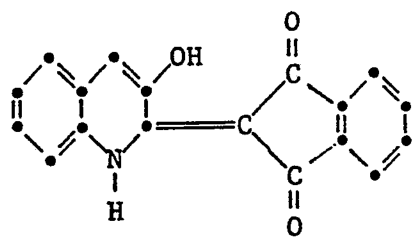

und 20 g einer wässrigen Präparation enthaltend 9 g des Farbstoffes der Formel

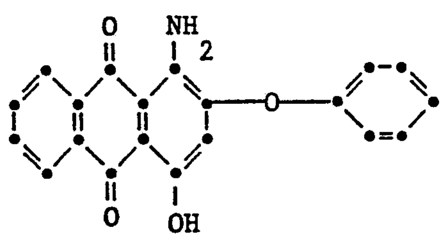

und 20 g einer wässrigen Präparation enthaltend 7.2 g des Farbstoffes der Formel

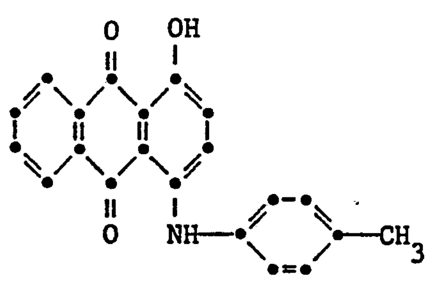

werden in 920 g eines Verdünners der Zusammensetzung gegeben:
590 g Wasser
10 g einer Mischung von Antischaummittel auf Basis von 2-Aethyl-n-Hexanol
250 g Polyvinylalkohol (Polymerisationsgrad ca. 530; Mol.Gew. ca. 20'000) in Wasser (Feststoffgehalt 20 %)
150 g Acrylsäuremethylester/-äthylester Copolymerisat (Mischungsverhältnis der Monomeren ca. 1:1, Mol. Gew. ca. 22'000 als Lösung in Wasser/Isopropanol (2:1), Feststoffgehalt. 40 %)
Die gebrauchsfertige Tinte hat eine Viskosität von 210 mPas.

Das Bedrucken des Papiers erfolgt wie im Beispiel 1 beschrieben. Bedruckt man mit dem so hergestellten Papier ein Polyestergewebe im Transferdruck, so erhält man einen konturenscharfen, braunen Druck.

**Beispiel 4:**

Verfährt man wie im Beispiel 1 beschrieben, verwendet aber als Verdünner 800 g eines solchen der Zusammensetzung:

420 g Wasser

5 g Triäthanolamin

10 g einer Mischung von Antischaummittel auf Basis von 2-Aethyl-n-Hexanol

250 g Acrylsäuremethylester/-äthylester Copolymerisat (Mischungsverhältnis der Monomeren ca. 1:1, Mol. Gew. ca. 22'000, als wässrige Lösung, Feststoffgehalt: 24%)

185 g Polyvinylalkohol (Polymerisationsgrad ca. 530; Mol.Gew. ca. 20'000) in Wasser (Feststoffgehalt 20 %) und

130 g Polyvinylalkohol, zu 11 bis 14 % verestert in Wasser (Feststoffgehalt 10 %)
(Polymerisationsgrad: ca. 2'000; Mol. Gew. ca. 100'000).

so erhält man eine Drucktinte mit einer Viskosität von 200 mPas.

**Beispiel 5:**

Verfährt man wie im Beispiel 1 beschrieben, verwendet jedoch als Verdünner 800 g eines solchen der folgenden Zusammensetzung:

732 g Wasser

15 g eines Antischaummittels auf Basis von 2-Aethyl-n-Hexanol

3 g Ammoniak, 25 %ige wässrige Lösung

200 g Acrylsäuremethyl/-äthylester-Styrol Copolymer (20% Acrylsäureester, 80% Styrol als wässrige Emulsion; Feststoffgehalt. 48 %)

50 g Polyvinylalkohol (Polymerisationsgrad ca. 530; Mol. Gew. ca. 20'000) in Wasser (Feststoffgehalt: 20 %)

so erhält man eine Drucktinte mit einer Viskosität von 11 mPas und einem pH von 8,5.

Mit dieser Tinte bedruckte Transferdruckträger ergeben auf Polyestermaterial ebenfalls intensiv rote Musterungen mit scharfen Konturen.

**Patentansprüche** für die Vertragsstaaten: BE, CH, OE, FR, GB, IT, LI, NL

1. Wässrige Drucktinten, welche mindestens einen für den Transferdruck geeigneten sublimierbaren Farbstoff und gegebenenfalls weitere Zusätzte enthalten, dadurch gekennzeichnet, dass diese neben mindestens einem Polyvinylalkohol, ein Polyacrylat und/oder ein Acrylsäuremethyl/äthylester-Styrol Copolymer enthalten.

2. Wässrige Drucktinten gemäss Anspruch 1, dadurch gekennzeichnet, dass diese eine Viskosität von 10 bis 300 mPas aufweisen.

3. Wässrige Drucktinten gemäss Anspruch 1, dadurch gekennzeichnet, dass deren Gehalt an Polyvinylalkohol, Polyacrylat und/oder Acrylsäuremethyl/äthylester-Styrol Copolymer insgesamt 5 bis 20 Gew. % beträgt.

4. Wässrige Drucktinten gemäss Anspruch 1, dadurch gekennzeichnet, dass diese als Polyvinylalkohol bzw. als Polyacrylat und/oder Acrylsäuremethyl/äthylester-Styrol Copolymer solche mit einem Molgewicht von über 10'000 enthalten.

5. Wässrige Drucktinten gemäss Anspruch 1, dadurch gekennzeichnet, dass diese als weiteren Zusatz ein Antischaummittel enthalten.

6. Verwendung der wässrigen Drucktinten gemäss Anspruch 1 auf Tiefdruckmaschinen zum Bedrucken von Transferdruckträgern.

**Patentansprüche** für din Vertragsstaat: AT

1. Verfahren zur Herstellung wässriger Drucktinten für den Transferdruck, dadurch gekennzeichnet, dass man einen für den Transferdruck geeigneten sublimierbaren Farbstoff und gegebenenfalls weitere Zusätze mit einem wässrigen Verdünner vermischt, der neben mindestens einem Polyvinylalkohol, ein Polyacrylat und/oder ein Acrylsäuremethyl/äthylester-Styrol Copolymer enthält.

2. Verfahren gemäss Anspruch 1, dadurch gekennzeichnet, dass man eine Drucktinte mit einer Viskosität von 10 bis 300 mPa.s herstellt.

3. Verfahren gemäss Anspruch 1, dadurch gekennzeichnet, dass man eine Drucktinte herstellt, deren Gehalt an Polyvinylalkohol, Polyacrylat und/oder Acrylsäuremethyl/äthylester-Styrol Copolymer insgesamt 5 bis 20 Gew.% beträgt.

4. Verfahren gemäss Anspruch 1, dadurch gekennzeichnet, dass man als Polyvinylalkohol bzw. Polyacrylat und/oder Acrylsäuremethyl/äthylester-Styrol Copolymer solche mit einem Molgewicht von über 10'000 verwendet.

5. Verfahren gemäss Anspruch 1, dadurch gekennzeichnet, dass man als weitere Zusätze ein Antischaummittel verwendet.

6. Verwendung der gemäss Anspruch 1 erhaltenen Drucktinten zum Bedrucken von Transferdruckträgern auf Tiefdruckmaschinen.

**Claims** for the Contracting States: BE, CH, DE, FR, GB, IT, LI, NL

1. Aqueous printing inks comprising at least one sublimable dye suitable for transfer printing and optionally further ingredients, characterised in that said printing inks contain, in addition to at least one polyvinyl alcohol, a polyacrylate and/or a styrene acrylic copolymer.

2. Aqueous printing inks according to claim 1 which have a viscosity of 10 to 300 mPas.

3. Aqueous printing inks according to claim 1, characterised in that the total content of polyvinyl alcohol, polyacrylate and/or styrene acrylic copolymer is of 5 to 20% by weight.

4. Aqueous printing inks according to claim 1, wherein the polyvinyl alcohol, polyacrylate and/or styrene acrylic copolymer each have a molecular weight of more than 10,000.

5. Aqueous printing inks according to claim 1, which additionally contain an antifoam.

6. Use of the aqueous printing inks according to claim 1 for printing supports suitable for transfer printing on gravure machines.

**Claims** for the Contracting State: AT

1. Process for the manufacture of aqueous printing inks for transfer printing which comprises mixing at least one sublimable dye suitable for transfer printing and optionally further ingredients with an aqueous diluent containing, in addition to at least one polyvinyl alcohol, a polyacrylate and/or a styrene acrylic copolymer.

2. Process according to claim 1 which comprises the manufacture of a printing ink with a viscosity of 10 to 300 mPas.

3. Process according to claim 1 which comprises the manufacture of a printing ink with a total content of polyvinyl alcohol, polyacrylate and/or styrene acrylic copolymer of 5 to 20% by weight.

4. Process according to claim 1, wherein the polyvinyl alcohol, polyacrylate and/or styrene acrylic copolymer each have a molecular weight of more than 10,000.

5. Process according to claim 1, wherein an antifoam is used as further ingredient.

6. Use of the printing inks obtained according to the process of claim 1 for printing supports suitable for transfer printing on gravure machines.

**Revendications** pour les Etats contractants: BE, CH, DE, FR, GB, IT, LI, NL

1. Encres aqueuses qui contiennent au moins un colorant sublimable convenant à l'impression par transfert, et éventuellement d'autres additifs, caractérisées en ce qu'elles contiennent, outre au moins un poly(alcool vinylique), un polyacrylate et/ou un copolymère (acrylate de méthyle et d'éthyle/styrène).

2. Encres aqueuses selon la revendication 1, caractérisées en ce qu'elles présentent une viscosité de 10 à 300 mPa.s.

3. Encres aqueuses selon la revendication 1, caractérisées en ce que leur teneur en poly(alcool vinylique), en polyacrylate et/ou en copolymère (acrylate de méthyle et d'éthyle/styrène) est en tout de 5 à 20 % en poids.

4. Encres aqueuses selon la revendication 1, caractérisées en ce que le poly(alcool vinylique)/ le polyacrylate et/ou le copolymère (acrylate de méthyle et d'éthyle/styrène) qu'elles contiennent ont une masse moléculaire supérieure à 10 000.

5. Encres aqueuses selon la revendication 1, caractérisées en ce qu'elles contiennent en tant qu'additif supplémentaire un agent antimousse.

6. Utilisation des encres aqueuses selon la revendication 1 sur des machines d'héliogravure pour l'impression de supports pour impression par transfert.

**Revendications** pour l'Etat Contractant: AT

1. Procédé de préparation d'encres aqueuses pour l'impression par transfert, caractérisé en ce qu'on mélange un colorant sublimable convenant à l'impression par transfert, et éventuellement d'autres additifs, à un diluant aqueux qui, outre au moins un poly(alcool vinylique), contient un polyacrylate et/ou un copolymère (acrylate de méthyle et d'éthyle/styrène).

2. Procédé selon la revendication 1, caractérisé en ce qu'on prépare une encre ayant une viscosité de 10 à 300 mPa.s.

3. Procédé selon la revendication 1, caractérisé en ce qu'on prépare une encre dont la teneur en poly(alcool vinylique), en polyacrylate et/ou en copolymère (acrylate de méthyle et d'éthyle/styrène) est en tout de 5 à 20 % en poids.

4. Procédé selon la revendication 1, caractérisé en ce qu'on utilise en tant que poly(alcool vinylique) ou polyacrylate et/ou copolymère (acrylate de méthyle et d'éthyle/ styrène) ceux ayant une masse moléculaire supérieure à 10 000.

5. Procédé selon la revendication 1, caractérisé en ce qu'on utilise en tant qu'additif supplémentaire un agent antimousse.

6. Utilisation des encres obtenues selon la revendication 1 sur des machines d'héliogravure pour l'impression de supports pour impression par transfert.